# EUROPEAN PATENT SPECIFICATION

(11) **EP 1 690 459 B1**
(45) Date of publication and mention of the grant of the patent: **16.04.2008**
(21) Application number: 05290335.8
(22) Date of filing: 15.02.2005
(51) Int. Cl.: A43B 5/16, B29D 31/515, B29D 31/50, A63C 1/42

(54) **Ice skate boot**
Eisschlittschuh
Chaussure de patin à glace

(43) Date of publication of application: 16.08.2006
(73) Proprietor: Bauer Nike Hockey Inc., St-Jérôme, Québec J7Y 5G2 (CA)
(72) Inventor: Labonte, Ivan, Montréal, Québec H2G 2G4 (CA)
(74) Representative: Burbaud, Eric

(56) References cited:
- EP-A- 1 384 568
- EP-A- 1 433 505
- EP-A- 1 518 591
- FR-A- 2 013 165
- US-A1- 2001 025 439
- US-A1- 2004 226 113

## Description

### FIELD OF THE INVENTION

The present invention relates to an ice skate boot comprising an outer shell having a layer thermoformable foam.

### BACKGROUND OF THE INVENTION

The construction of ice skates has become quite complex over recent years. The most recent trend in skate construction is to manufacture skates using lightweight components European Patent Application EP-A-1384568 relates to a lasted skate boot comprising an upper having an outer shell made of thermoformable synthetic material and an inner lining mounted inside the outer shell. The outer shall comprises a heel counter, an ankle portion, medial and lateral quarters and reinforcing elements provided on the heel counter, ankle portion, medial quarter or lateral quarter. Each of the reinforcing elements comprises a ridge formed on one of the inner or outer surface of the outer shell and a groove registering with the ridge, the groove being formed on one of the inner or outer surface of the outer shell. The outer shell may also comprise an ankle portion with a rear profile that follows the one of the Achilles tendon. There is a need in the industry for a skate that is lighter and/or has less components than existing skates.

### SUMMARY OF THE INVENTION

The invention provides an ice skate boot for enclosing a human foot, the foot having a heel, an ankle with a medial malleolus and a lateral mallcolus, a plantar surface, medial and lateral sides and toes. The ice skate boot comprises an outer shell having a layer thermoformable foam and thermoformed such that said outer shell comprises: (a) a heel portion for receiving the heel of the foot; (b) an ankle portion for receiving the ankle; (c) medial and lateral side portions for facing the medial and lateral sides of the foot respectively; (d) medial and lateral toe portions for covering the toes of the foot ; and (e) a medial skirt portion extending downwardly from the medial side and toe portions and a lateral skirt portion extending downwardly from the lateral side and toe portions, the medial and lateral skirt portions comprising medial and lateral bottom portions for receiving an ice skate blade.

The invention also relates to a method of manufacturing an ice skate boot for enclosing the human foot. The method comprises: (a) providing a sheet having a layer thermoformable foam; (b) thermoforming the sheet to form an outer shell that comprises: (i) a heel portion for receiving the heel of the foot; (ii) an ankle portion for receiving the ankle; (iii) medial and lateral side portions for facing the medial and lateral sides of the foot respectively; (iv) medial and lateral toe portion for covering the toes of the foot; and (v) a medial skirt portion extending downwardly from the medial side and toe portions and a lateral skirt portion extending downwardly from the lateral side and toe portion; and (c) folding the medial and lateral skirt portions for forming medial and lateral bottom portions for receiving an ice skate blade.

These and other aspects and features of the present invention will now become apparent to those of ordinary skill in the art upon review of the following description of specific embodiments of the invention in conjunction with the accompanying drawings.

### BRIEF DESCRIPTION OF THE DRAWINGS

A detailed description of examples of embodiments of the present invention is provided hereinbelow with reference to the following drawings, in which:
Figure 1 is a side view of a right human foot with the integument of the foot shown in stippled lines and the bones shown in solid lines;
Figure 2 is a front view of the human foot of Figure 1;
Figure 3 is a perspective view of a skate with an ice skate boot in accordance with a first embodiment of the present invention;
Figure 4 is an exploded view of the ice skate of Figure 3;
Figure 5 is a perspective view of the outer shell of the skate boot of Figures 3 and 4, wherein the outer shell is in a partial state of completion;
Figure 6 is a perspective view of the outer shell of the skate of Figures 3 and 4;
Figure 7 is a bottom view of the outer shell of Figure 6;
Figure 8 is a perspective view of a skate with an ice skate boot in accordance with a second embodiment of the present invention;
Figure 9 is a perspective view of the outer shell of the skate of Figure 8, wherein the outer shell is in a partial state of completion;
Figure 10 is a perspective view of the outer shell of the skate boot of Figure 8;
Figure 11 is a bottom view of the outer shell of Figure 10;
Figure 12 is a top, front perspective view of an outer shell in accordance with another embodiment of the invention, wherein the outer shell is in a partial state of completion;
Figure 13 is a bottom, rear perspective view of the outer shell of Figure 12;
Figure 14 shows a sheet of material with a profile of an outer shell; and
Figure 15 shows a machine suitable for thermoforming an outer shell in accordance with the present invention.

In the drawings, embodiments of the invention are illustrated by way of example. It is to be expressly understood that the description and drawings are only for the purposes of illustration and as an aid to understanding, and are not intended to be a definition of the limits of the invention.

### DETAILED DESCRIPTION OF THE EMBODIMENTS

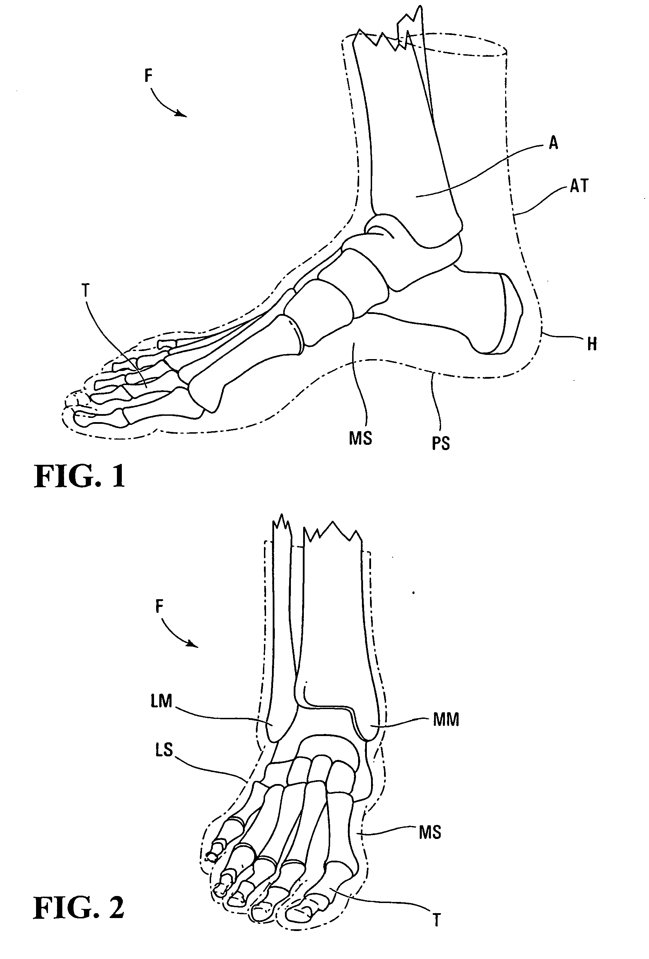

Shown in Figures 1 and 2 is a typical right human foot F that includes toes T, a plantar surface PS, a medial side MS and a lateral side LS. In addition, the human foot includes a heel H, an Achilles tendon AT and an ankle A having a lateral malleolus LM and a medial malleolus MM, the lateral malleolus LM being at a lower position than the medial malleolus MM.

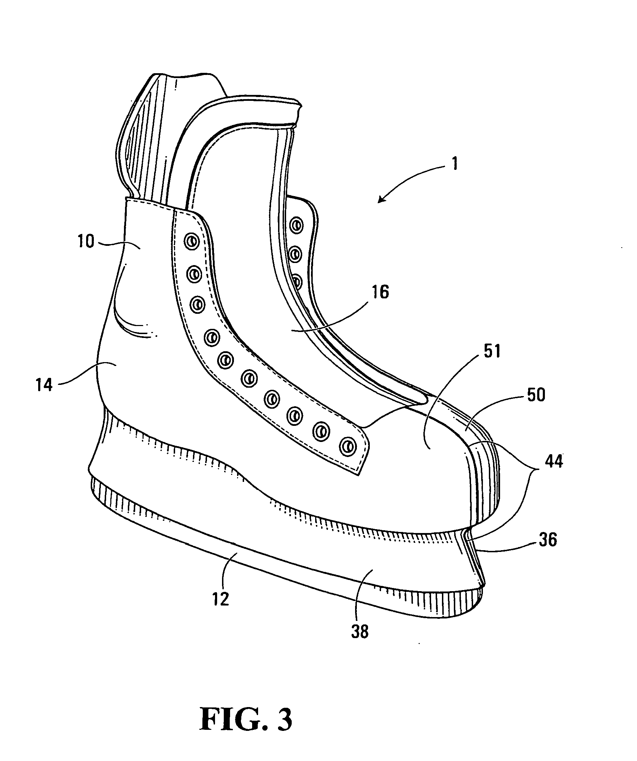

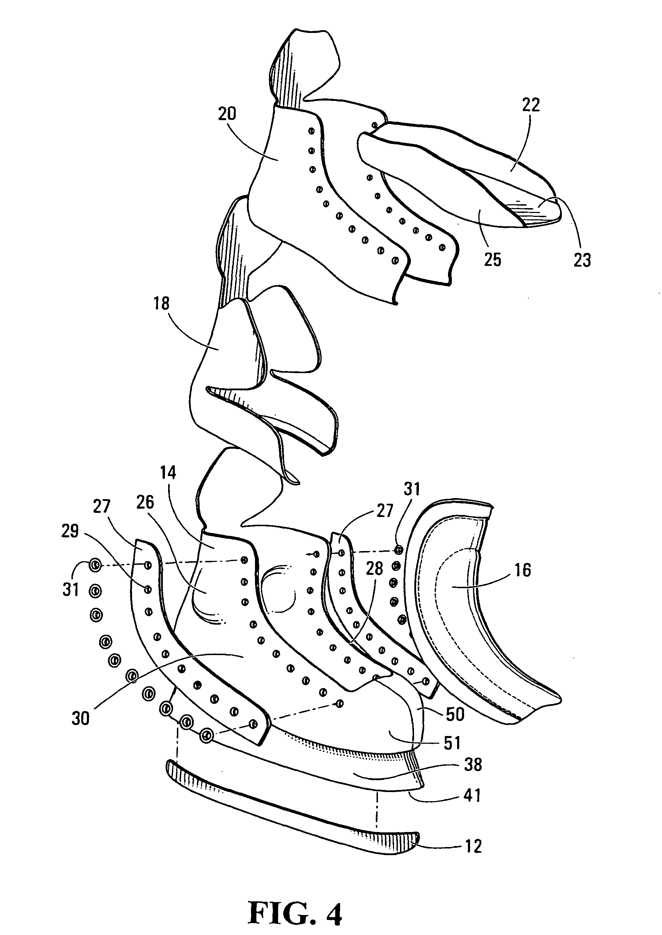

Shown in Figures 3 and 4 is an ice skate 1 that comprises a skate boot 10 and an ice skate blade 12. The skate boot 10 is suitable for enclosing the right human foot F and comprises an outer shell 14, a tongue 16, a rigid ankle support 18 (optional component), an inner lining 20 and a footbed 22. The outer shell 14 is made of a thermoformable material. As used herein, the expression "thermoformable material" refers to a material that is capable of softening when heated and of hardening again when cooled. Some non-limiting examples of different types of thermoformable material comprise ethylene vinyl acetate (EVA) foam, polyethylene foam, polystyrene foam, polypropylene foam and thermoformable materials sold under the trade-marks MEGABIX^{®}, SURLYN^{®}, SONTARA^{®}, FORMO500^{®}, BYLON^{®}, MOSOCA^{®} and NYLON^{®} 66.

The inner lining 20 is glued or sewed to the inner surface of the outer shell 14. The inner lining 20 is made of a layer of soft material such as a sheet of polyester laminated with a layer of foam, or a layer of fabric made from 100% nylon fibers. The inner lining 20 comprises an inner surface that is adapted to contact the skin of heel H, ankle A, and medial and lateral sides MS, LS of the foot F in use.

The footbed 22 has an upper surface 23 for receiving the plantar surface PS and a padding wall 25 that projects upwardly from the upper surface 23 for partially cupping the heel H and extending up to a medial line of the foot F. The footbed 22 provides an envelope for the foot F that is comfortable yet offers a supporting "bed" that maintains the foot F.

Two narrow bands 27 are secured to the outer shell 14. The narrow bands 27 are made of fabric, textile or leather. Apertures 29 are punched through the narrow bands 27, the outer shell 14 and the inner lining 20. Once punched, the apertures 29 are reinforced by metallic rivets 31 or any suitable means known in the art of footwear construction.

As shown in Figures 3 to 7, the outer shell 14 is thermoformed such that it comprises a heel portion 24 for receiving the heel H, an ankle portion 26 for receiving the ankle A, medial and lateral side portions 28, 30 for facing the medial and lateral sides MS, LS of the foot F respectively, and medial and lateral toe portions 50, 51 for covering the toes T.

The medial and lateral side portions 28, 30 extend forwardly from the heel portion 24 and ankle portion 26. The heel portion 24 is substantially cup shaped for following the contour of the heel H. The ankle portion 26 comprises a medial cup-shaped depression 32 for receiving the medial malleolus MM and a lateral cup-shaped depression 34 for receiving the lateral malleolus LM. The lateral cup-shaped depression 34 is located slightly lower than the medial cup-shaped depression 32, for conforming to the morphology of the foot F.

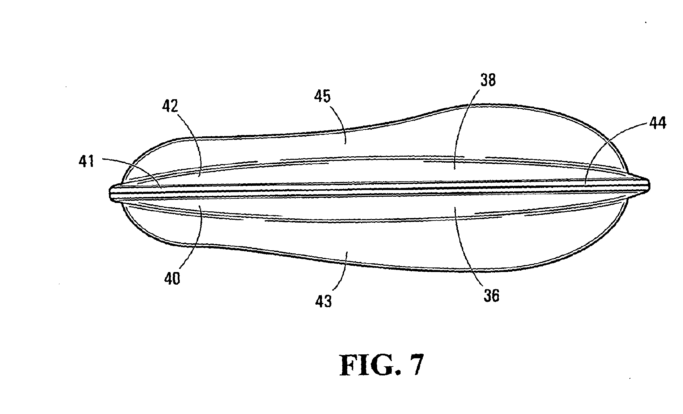

The medial and lateral side portions 28, 30 and the medial and lateral toe portions 50, 51 comprise respective medial and lateral skirt portions 36, 38 that extend downwardly therefrom. Moreover, during the thermoforming process, the medial and lateral skirt portions 36, 38 are folded inwardly in order to form respective medial and lateral bottom portions 40, 42 for receiving the blade 12. As best seen in Figure 7, the medial and lateral bottom portions 40, 42 may have medial and lateral bottom surface that form a bottom surface 41 on which the blade 12 may be affixed. It is understood that the blade 12 may be affixed to one of the bottom surface of the bottom portions 40, 42 if one of the bottom portions 40, 42 is longer than the other. Alternatively, the bottom portions 40, 42 may comprise a longitudinal slot (not shown) in which the blade 12 is received.

The medial and lateral skirt portions 36, 38 may also be thermoformed such that they comprises respective medial and lateral sole portions 43, 45 for facing the plantar surface PS of the foot F. The medial and lateral bottom portions 40, 42 are joined together along a longitudinal line 44 and may be affixed together via any method known in the art, such as via stitching, thermal bonding, adhesive, piping, zipping or staples. The footbed 22 may sit upon the internal surfaces of the sole portions 43, 45 for covering the seam and/or gap where the two skirt portions 36, 38 meet.

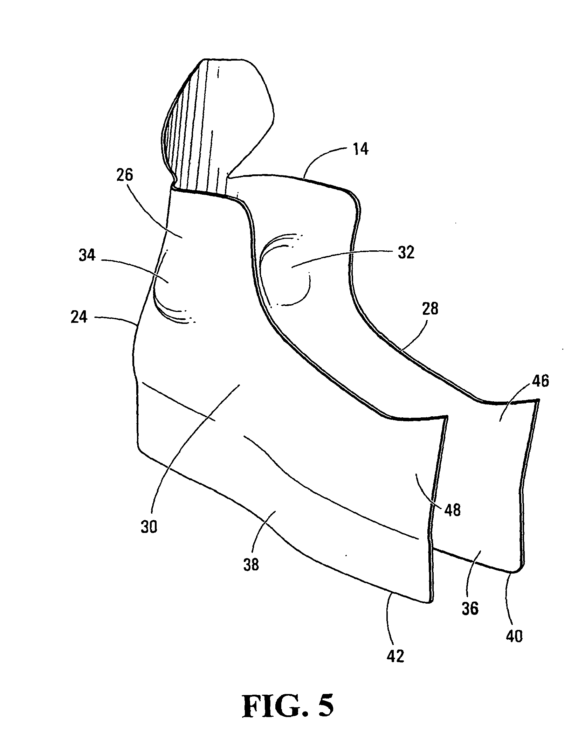

As shown in Figure 5, in its partial state of completion, the outer shell 14 comprises respective medial and lateral frontward portions 46, 48 that are folded inwardly so as to form the medial and lateral toe portions 50, 51. In the embodiment shown, the medial and lateral toe portions 50, 51 meet along the longitudinal line 44. However, in an alternative embodiment, one of the frontward portions 46, 48 can be longer than the other, such that when the two toe portions 50, 51 are joined together, they are not joined along the longitudinal line 44. The toe portions 50, 51 may be affixed together via any method known in the art, such as via stitching, thermal bonding, adhesive, piping, zipping or staples.

The tongue 16 is affixed to the toe portions 50, 51 and extends upwardly and rearwardly from the toe portions 50, 51 for covering the forefoot of the foot F. The frontal edge of the tongue 16 can be sewn directly to the toe portions 50, 51 or can be fixed in an alternative manner known in the art.

In an alternative embodiment not shown in the figures, the outer shell 14 comprises a tongue portion that is integrally formed with one of the medial and lateral side portions 28, 30. As such, once thermoformed, the tongue portion extends upwardly from one of the toe portions 50, 51 in order to form a tongue that is integrally formed with the outer shell 14.

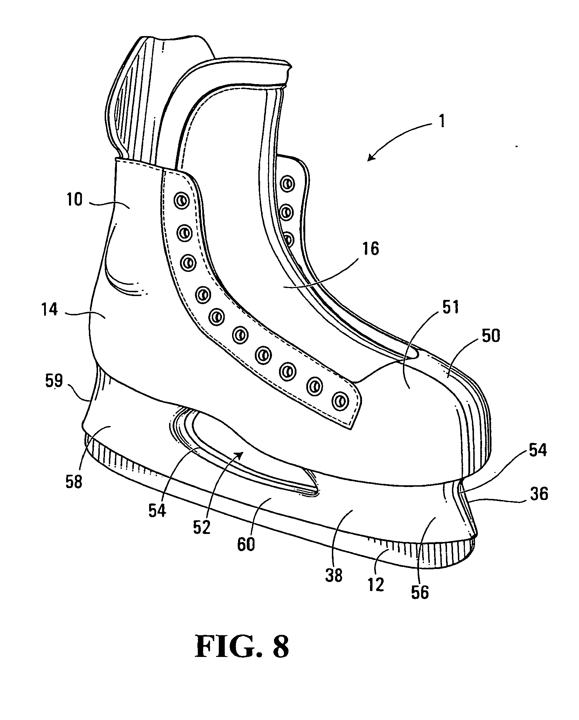

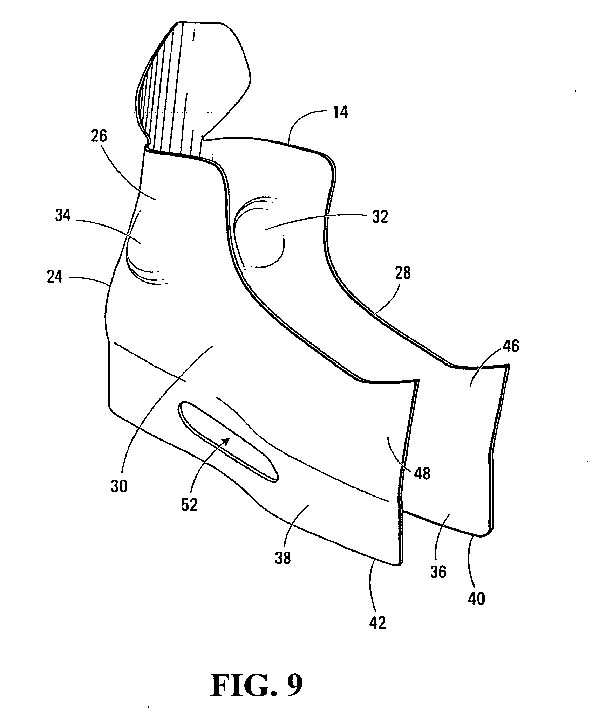

Figures 8 to 11 show a second embodiment of the skate boot 10 in which a reference numeral designating an element of the first embodiment illustrated in Figures 3 to 7 designates the same element to facilitate the description.

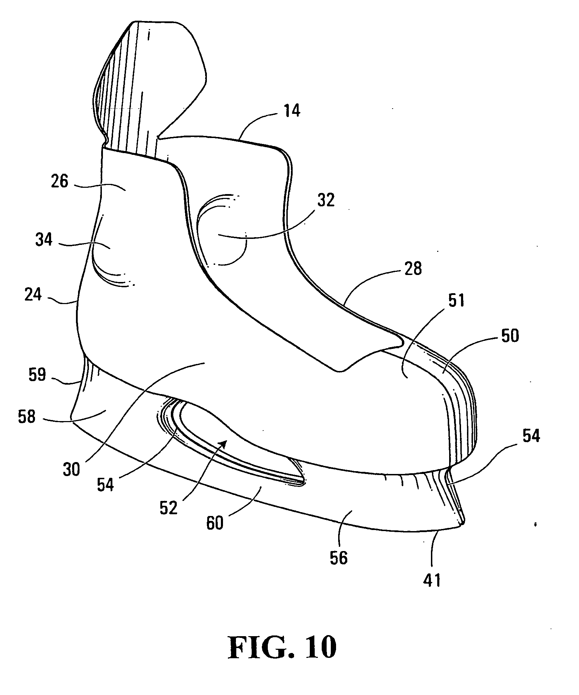

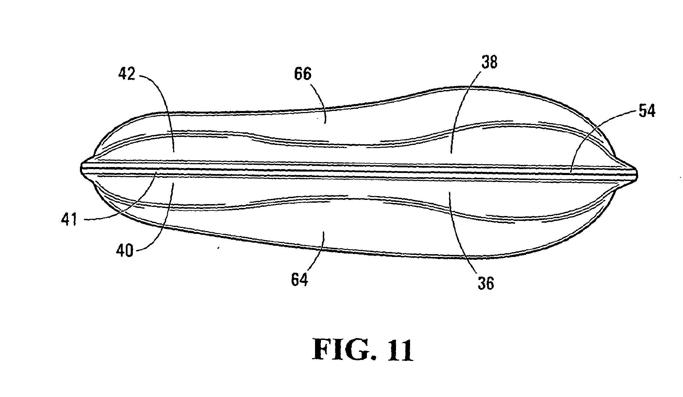

In this second embodiment, the skate boot 10 is identical to the one illustrated in Figures 3 and 4 to the exception that the medial and lateral skirt portions 36, 38 of the outer shell 14 have each an aperture 52 for reducing the weight of the skate boot 10. Moreover, the medial and lateral skirt portions 36, 38 form a front pedestal 56, a rear pedestal 58 with a rear portion 59 and a bridge portion 60 interconnecting the front and rear pedestals 56, 58. As shown in Figure 10, the apertures 52 are located between the front and rear pedestals 56, 58 and above the bridge portion 60. The medial and lateral skirt portions 36, 38 are integrally formed at the rear portion 59 of the rear pedestal 58 and the bottom portions 40, 42 and the toe portions 50, 51 are affixed together along a longitudinal line 54. The medial and lateral bottom portions 40, 42 comprise medial and lateral bottom surfaces that form the bottom surface 41 on which the blade 12 may be affixed. Alternatively, the bottom portions 40, 42 may comprise a longitudinal slot (now shown) in which the blade 12 may be mounted. As shown in Figure 11, the medial and lateral skirt portions 36, 38 may also be thermoformed such that they comprise respective medial and lateral sole portions 64, 66 for facing the plantar surface PS of the foot F.

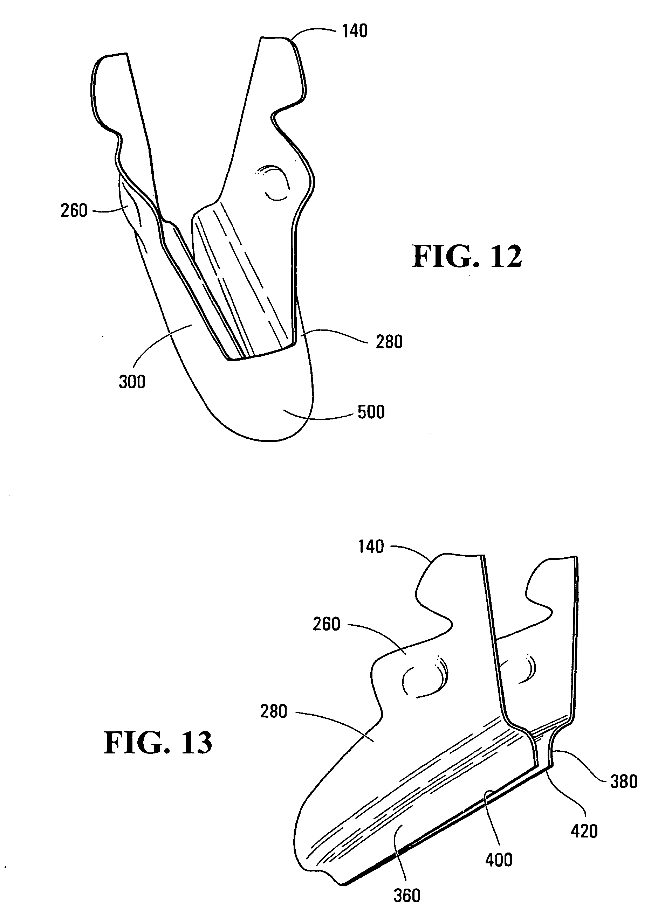

Figure 12 and 13 show another embodiment of an outer shell 140 made of a thermoformable material and thermoformed such that it comprises an ankle portion 260 for receiving the ankle A, medial and lateral side portions 280, 300 for facing the medial and lateral sides MS, LS of the foot F respectively, and a toe cap 500 for covering the toes T. The toe cap 500 is integrally formed with the medial and lateral side portions 280, 300.

The medial and lateral side portions 280, 300 and the toe cap 500 comprise respective medial and lateral skirt portions 360, 380 that extend downwardly therefrom. Moreover, during the thermoforming process, the medial and lateral skirt portions 360, 380 are folded inwardly in order to form respective medial and lateral bottom portions 400, 420 for receiving the blade 12. The medial and lateral bottom portions 400, 420 may have medial and lateral bottom surface that form a bottom surface on which the blade 12 may be affixed. It is understood that the blade 12 may be affixed to one of the bottom surface of the bottom portions 400, 420 if one of the bottom portions 400, 420 is longer than the other. Alternatively, the bottom portions 400, 420 may comprise a longitudinal slot (not shown) in which the blade 12 is received.

The medial and lateral skirt portions 360, 380 may also be thermoformed such that they comprises respective medial and lateral sole portions for facing the plantar surface PS of the foot F. The medial and lateral bottom portions 400, 420 may be affixed together and the outer shell 140 may be completed by affixing together its rear portions.

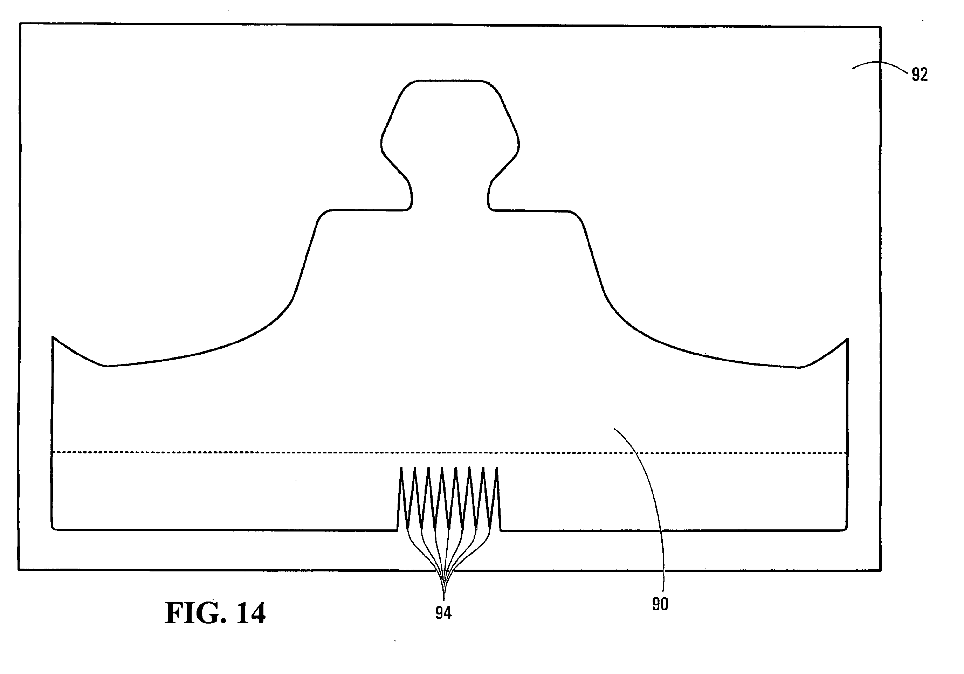

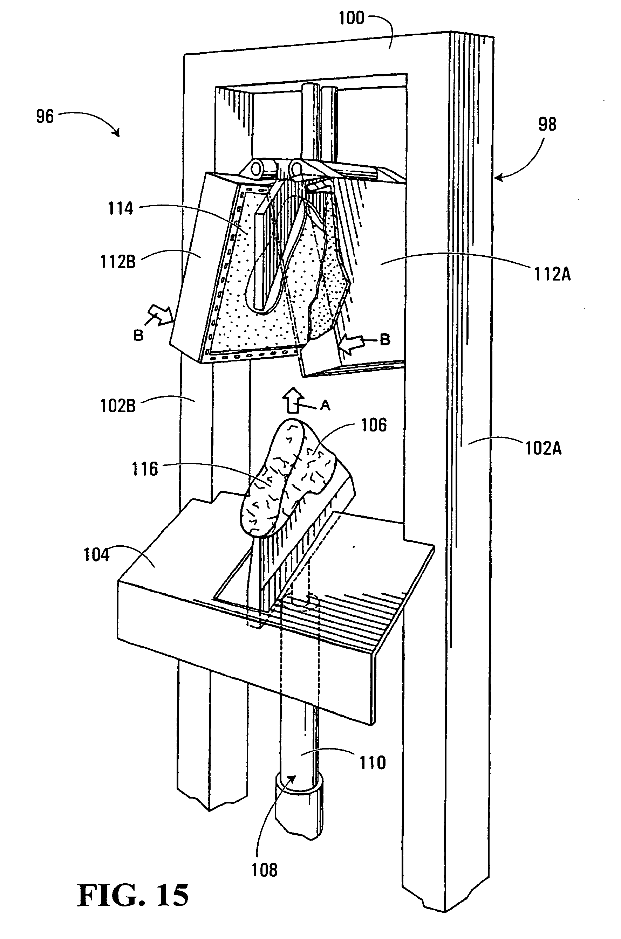

The method of forming the outer shell 14 in accordance with the present invention will now be described herein below with reference to Figures 14 and 15. For the purposes of the present application, the method will be described with respect to the outer shell 14, but it should be appreciate that the method could have also been described with respect to the outer shell 140.

The first step in manufacturing the outer shell 14 is to die-cut a blank 90 from a sheet of material 92, the blank 90 having the profile of the outer shell 14. Machines and methods for die-cutting shapes from sheets of material are known in the art, and as such will not be described in more detail herein. As shown in Figure 14, the blank 90 may include a plurality of projections 94 in the region close to the heel portion.

The sheet of material 92 is a composite sheet having a layer of thermoformable foam. Some non-limiting examples of different types of thermoformable foam include ethylene vinyl acetate (EVA) foam, polyethylene foam and polypropylene foam. High density polyethylene (HDPE) 1300, 1100 and 0907 foams can also be used. The sheet may be made of thermoforming materials such as those sold under the trade-mark MEGABIX^{®} (a core of extruded SURLYN^{®}, a backing of SONTARA^{®} and a hot melt coating; thickness of 0.95 mm), FORMO500^{®} (non woven polyester with a core of extruded polyolefinic, stiffening layers of synthetic latex on each side and an ethylene vinyl acetate hot melt adhesive on one side; thickness of 1.50 mm), BYLON^{®} (a nylon multifilament with a backing of black saturated needle punched polyester nonwoven and a face coating of non-fray urethane) and MOSOCA^{®} (NYLON^{®} 66 with a core of SURLYN^{®} and a PU coating). The composite sheet may also be made of a first sheet of polyethylene high density (HDPE) foam; a second sheet of thermoplastic; and a third composite sheet made of a first layer of cotton, a second layer of surlyn fibers, a third layer of a mesh of nylon fibers and a coating. These sheets being laminated together before or during the thermoforming process of the outer shell.

The sheet of material 92 may include two or three layers, wherein the outer layer of the outer shell 14 is more rigid that its inner layer. The layer of thermoformable foam may be placed between the outer and inner layers.

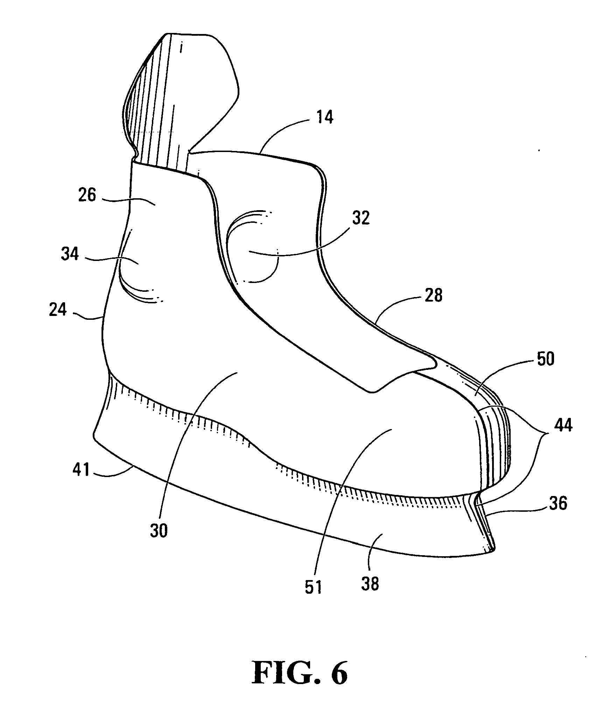

The second step in manufacturing the outer shell 14 is to thermoform the blank 90 into the three-dimensional shape of the outer shell 14 shown in Figure 6 or Figure 10.

Shown in Figure 14 is a non-limiting example of an apparatus 96 suitable for thermoforming the blank 90. The apparatus 96 comprises a supporting frame 98 having an outer shell traverse 100 and two pillars 102A and 102B. The two pillars 102A and 102B are joined together at mid-height by a ledge 104 that contains a control panel (not shown) with control buttons (not shown) for enabling an operator to control the apparatus 96. In the specific embodiment shown, the ledge 104 surrounds a last 106 that is supported by a movable support 108. The movable support 108 is a hydraulic or pneumatic piston cylinder 110 that is movable up and down in a vertical direction, as indicated by arrow A. It should be understood that lasts 106 of different shapes and sizes can be installed on apparatus 96 in order to manufacture outer shells 14 of different shapes and sizes.

The apparatus 96 further comprises a pair of clamps 112A, 112B that are mounted to the outer shell traverse 100 and positioned directly above last 106. Clamps 112A, 112B are adapted to open and close, as indicated by arrows B in order to clamp around the last 106. The clamps 112A, 112B comprise pressure pads 114 for receiving the shape 94 of thermoformable material. In addition, each of the clamps 112A, 112B comprises a bladder (not shown) having an inflated membrane and a fluid pressure delivery circuit (not shown) for causing the membrane to inflate, such that it is able to surround the last 106 during use.

In operation, the blank 90 is placed on the last 106 and is accurately positioned and secured in place via the use of clips (not shown). Once the blank 90 is securely in place, the operator activates the apparatus 96 which causes the piston-cylinder 110, and therefore the last 106, to raise up between the two open clamps 112A, 112B. When the last 106 reaches the pressure pads 114, the piston-cylinder 110 reaches a set value and stops. It should be understood that in an alternative embodiment, the last 106 can remain stationary, and the clamps 112A, 112B can be connected to piston-cylinders for lowering the clamps 112A, 112B around the last 106.

Once the last 106 is positioned between clamps 112A, 112B, the clamps 112A, 112B begin to close thereby causing the pressure pads 114 to apply an initial pressure to the blank 90 positioned on the last 106. When the clamps 112A, 112B are completely closed, the bladders are then inflated by air or liquid injection, which forces the flexible membranes of the bladders to encircle the blank 90 around the last 106 and apply pressure thereto. Once the pressure within the bladders has reached a set value wherein the bladder membranes apply an even pressure to the thermoformable material, the pressure is maintained for a certain amount of time, and is then released. In a non-limiting embodiment, a pressure of between 200 Kpa and 830 Kpa is maintained around the last 106 for approximately 1 to 2 minutes. In addition to the pressure, heat is also applied to the thermoformable material. The applied heat is generally between 120°C and 290°C, with the preferred temperature being approximately 230°C. Once heated, the thermoformable material becomes malleable and, as such, is able to acquire the three-dimensional shape applied to it by the last 106.

When the bladders 114 apply pressure and heat to the blank 90, they are able to press the thermoformable material around the last. For example, the bladders 114 are adapted for applying a pressure on the medial and lateral skirt portions 36, 38 such that they are folded inwardly and joined together along the longitudinal line 44 (or 54) for forming the bottom portions 40, 42 that is adapted for receiving the blade 12. The bladders 114 may also apply a pressure on the medial and lateral skirt portions 36, 38 such that they form the respective medial and lateral sole portions 43, 45 (or 64, 66) for facing the plantar surface PS of the foot. In other words, the medial and lateral skirt portions 36, 38 are pushed together so as to form the bottom portions 40, 42 and the sole portions 43, 45 (or 64, 66). The bladders 114 (or other bladders) may also be adapted for applying pressure on the frontward portions 46, 48 such that they are folded around the toe portion of the last 106 to form the toe portions 50, 51 for covering the toes T.

Once the outer shell 14 has been thermoformed and molded into the final shape shown in Figure 6 or 10, the last 106 is lowered by the piston cylinder 110 to its original position. The medial and lateral bottom portions 40, 42 (or 400, 420) and toe portions 50, 51 may then be affixed together using a chosen one of the techniques described above, such as stitching, adhesive, piping, zipping, staples and thermal bonding.

Once the skate boot 10 has been assembled, the ice skate blade 12 is mounted to the bottom portions 40, 42. More specifically, the ice blade 12 may be affixed to the bottom surface 41 or it may be inserted in a longitudinal groove formed in the bottom portions 40, 42 and then secured in place using any manner known in the art, such as screws, adhesive or any other attachment means known in the art.

The above description of the embodiments should not be interpreted in a limiting manner since other variations, modifications and refinements are possible within the scope of the present invention as defined by the appended claims.

## Claims

1. An ice skate boot (10) for enclosing a human foot, the foot having a heel, an ankle with a medial malleolus and a lateral malleolus, a plantar surface, medial and lateral sides and toes, said ice skate boot (10) comprising an outer shell (14; 140)having a layer of thermoformable foam, said outer shell being thermoformed such that it comprises: a heel portion (24) for receiving the heel of the foot; an ankle portion (26; 260) for receiving the ankle; medial and lateral side portions (28, 30; 280, 300) for facing the medial and lateral sides of the foot respectively; and medial and lateral toe portions (50, 51; 500) for covering the toes of the foot;
said skate boot **being characterized in that** said outer shell is thermoformed such that it comprises: a medial skirt portion (36; 360) extending downwardly from said medial side and toe portions and a lateral skirt portion (38; 380) extending downwardly from said lateral side and toe portions, said medial and lateral skirt portions comprising medial and lateral bottom portions (40, 42; 400, 420) for receiving an ice skate blade (12).

2. An ice skate boot as defined in claim 1, wherein said medial and lateral bottom portions (40, 42; 400, 420) comprises medial and lateral bottom surfaces forming a bottom surface (41) on which the ice skate blade (12) is affixed.

3. An ice skate boot as defined in claim 1, wherein said medial and lateral bottom portions (40, 42; 400, 420) comprises medial and lateral bottom surfaces, the ice skate blade (12) being affixed on one of said medial and lateral bottom surfaces.

4. An ice skate boot as defined in claim 1, wherein said medial and lateral bottom portions (40, 42; 400, 420) define a longitudinal groove in which the ice skate blade (12) is received.

5. An ice skate boot as defined in claim 1, wherein said medial and lateral bottom portions (40, 42; 400, 420) are affixed together.

6. An ice skate boot as defined in claim 5, wherein said medial and lateral skirt portions (36, 38; 360, 380) are thermoformed such that they comprise respective medial and lateral sole portions (43, 45) for facing the plantar surface of the foot.

7. An ice skate boot as defined in claim 6, wherein said medial and lateral bottom portions (40, 42; 400, 420) comprises medial and lateral bottom surfaces forming a bottom surface (41) on which the ice skate blade (12) is affixed.

8. An ice skate boot as defined in claim 6, wherein said medial and lateral bottom portions (40, 42; 400, 420) comprises medial and lateral bottom surfaces, the ice skate blade (12) being affixed on one of said medial and lateral bottom surfaces.

9. An ice skate boot as defined in claim 6, wherein said medial and lateral bottom portions (40, 42; 400, 420) define a longitudinal groove in which the ice skate blade is received.

10. An ice skate boot as defined in claim 6, wherein each of said medial and lateral skirt portions (36, 38; 360, 380) comprises an aperture (52) for reducing the weight of said skate boot.

11. An ice skate boot as defined in claim 10, wherein said medial and lateral skirt portions (36, 38; 360, 380) are thermoformed such that they comprise a front pedestal (56), a rear pedestal (58) and a bridge portion (60) interconnecting said front and rear pedestals (56, 58), said apertures (52) being located between said front and rear pedestals (56, 58) and above said bridge portion (60).

12. An ice skate boot as defined in claim 11, wherein said medial and lateral bottom and toe portions are affixed together along a longitudinal line (44; 54).

13. An ice skate boot as defined in claim 12, wherein said medial and lateral skirt portions (36, 38; 360, 380) are integrally formed together at a rear portion (59) of said rear pedestal (58).

14. An ice skate boot as defined in claim 12, wherein said medial and lateral skirt portions (36, 38; 360, 380) are integrally formed together at a front portion of said front pedestal (56).

15. An ice skate boot as defined in claim 6, wherein said medial and lateral toe portions arc integrally formed together for forming an integrated toe cap (500).

16. An ice skate boot as defined in claim 6, comprising a tongue (16) extending upwardly and rearwardly from said medial and lateral toe portions (50, 51).

17. An ice skate boot as defined in claim 6, comprising a tongue that is integrally formed with one of said medial and lateral side portions (28, 30).

18. An ice skate boot as defined in claim 15, comprising a tongue extending upwardly and rearwardly from said toe cap (500).

19. An ice skate boot as defined in claim 18, wherein said tongue is integrally formed with one of said medial and lateral side portions (28,30; 280, 300).

20. An ice skate boot as defined in claim 6, wherein said outer shell (14; 140) further comprises an outer layer and an inner layer, said outer layer being more rigid than said inner layer.

21. An ice skate boot as defined in claim 20, wherein said layer of thermoformable foam is between said outer and inner layers.

22. An ice skate boot as defined in claim 21, wherein said layers are made of different grades of thermoformable foam.

23. An ice skate boot as defined in claim 6, wherein said heel portion (24) is substantially cup shaped for following the contour of the heel of the foot.

24. An ice skate boot as defined in claim 23, wherein said ankle portion (26; 260) comprises a cup-shaped lateral depression (34) for receiving the lateral malleolus and a cup-shaped medial depression (32) for receiving the medial malleolus.

25. An ice skate boot as defined in claim 24, wherein said lateral cup-shaped depression (34) is below said medial cup-shaped depression (32).

26. An ice skate boot as defined in claim 6, comprising an inner lining (20) affixed to an inner surface of said outer shell (14; 140), said inner lining comprising a surface intended for contact with the heel, ankle and medial and lateral sides of the foot.

27. An ice skate boot as defined in claim 6, comprising a footbed (22) having an upper surface (23) facing the plantar surface of the foot and a wall (25) projecting upwardly from said upper surface, said wall partially cupping the heel and extending up to a medial line of the foot.

28. A method of manufacturing an ice skate boot (10) for enclosing a human foot, the foot having a heel, an ankle with a medial malleolus and a lateral malleolus, a plantar surface, medial and lateral sides and toes, said method comprising: providing a sheet having a layer of thermoformable foam (92); thermoforming said sheet (92) to form an outer shell (14; 140) that comprises: a heel portion (24) for receiving the heel of the foot; an ankle portion (26; 260) for receiving the ankle; medial and lateral side portions (28, 30; 280, 300) for facing the medial and lateral sides of the foot respectively; and medial and lateral toe portions (50, 51; 500) for covering the toes of the foot; said method being **characterized in** (a) thermoforming said outer shell (14, 140) such that it comprises a medial skirt portion (36; 360) extending downwardly from said medial side and toe portions and a lateral skirt portion (38; 380) extending downwardly from said lateral side and toe portion; and (b) folding said medial and lateral skirt portions for forming medial and lateral bottom portions (40, 52; 400, 420) for receiving an ice skate blade (12).

29. A method as defined in claim 28, comprising folding said medial and lateral skirt portions for forming medial and lateral sole portions for facing the plantar surface of the foot.

30. A method as defined in claim 28 or 29, comprising affixing together said medial and lateral bottom portions for forming a bottom surface on which an ice skate blade is mountable.

31. A method as defined in claim 28 or 29, comprising forming a longitudinal groove within said medial and lateral bottom portions for receiving an ice skate blade in said groove.

32. A method as defined in any one of claims 28 to 31, comprising affixing an inner lining to an inner surface of said outer shell, said inner lining comprising a surface intended for contact with the heel, ankle and lateral and medial sides of the foot.

33. A method as defined in any one of claims 28 to 32, comprising affixing a tongue to said medial and lateral toe portions.

34. A method as defined in any one of claims 28 to 33, comprising die-cutting a blank (90) from said sheet (92), said blank (90) having the profile of the outer shell (14; 140).

## Patentansprüche

1. Schlittschuhstiefel (10) zum Umschließen eines menschlichen Fußes, wobei der Fuß eine Ferse, einen Knöchel mit einem Innenknöchel und einem Außenknöchel, eine Plantaroberfläche, Innenseiten und Außenseiten und Zehen aufweist, wobei der Schlittschuhstiefel (10) eine Außenschale (14; 140) mit einer Lage aus warmformbarem Schaum umfasst,
wobei die Außenschale derart warmgeformt ist, dass sie umfasst: einen Fersenabschnitt (24) zum Aufnehmen der Ferse des Fußes; einen Knöchelabschnitt (26; 260) zum Aufnehmen des Knöchels; Innen- und Außenseitenabschnitte (28, 30; 280, 300), um den Innen- beziehungsweise Außenseiten des Fußes gegenüberzuliegen; und Innen- und Außenzehabschnitten (50, 51; 500) zum Bedecken der Zehen des Fußes;
wobei der Schlittschuhstiefel **dadurch gekennzeichnet ist, dass** die Außenschale derart warmgeformt ist, dass sie umfasst: einen Innenrandabschnitt (36; 360), der sich von der Innenseite und Zehabschnitten nach unten erstreckt, und einen Außenrandabschnitt (38; 380), der sich von der Außenseite und Zehabschnitten nach unten erstreckt, wobei die Innen- und Außenrandabschnitte Innen- und Außenbodenabschnitte (40, 42; 400, 420) zum Aufnehmen einer Schlittschuhklinge (12) umfassen.

2. Schlittschuhstiefel nach Anspruch 1, bei dem die Innen- und Außenbodenabschnitte (40, 42; 400, 420) Innen- und Außenbodenoberflächen umfassen, die eine Bodenoberfläche (41) ausbilden, an der die Schlittschuhklinge (12) befestigt ist.

3. Schlittschuhstiefel nach Anspruch 1, bei dem die Innen- und Außenbodenabschnitte (40, 42; 400, 420) Innen- und Außenbodenoberflächen umfassen, wobei die Schlittschuhklinge (12) an einer der Innen- oder Außenbodenoberflächen befestigt ist.

4. Schlittschuhstiefel nach Anspruch 1, bei dem die Innen- und Außenbodenabschnitte (40, 42; 400, 420) eine Längsnut definieren, in der die Schlittschuhklinge (12) aufgenommen ist.

5. Schlittschuhstiefel nach Anspruch 1, bei dem die Innen- und Außenbodenabschnitte (40, 42; 400, 420) aneinander befestigt sind.

6. Schlittschuhstiefel nach Anspruch 5, bei dem die Innen- und Außenrandabschnitte (36, 38; 360, 380) derart warmgeformt sind, dass sie jeweilige Innen- und Außensohlenabschnitte (43, 45) umfassen, um der Plantaroberfläche des Fußes gegenüberzuliegen.

7. Schlittschuhstiefel nach Anspruch 6, bei dem die Innen- und Außenbodenabschnitte (40, 42; 400, 420) Innen- und Außenbodenoberflächen umfassen, die eine Bodenoberfläche (41) ausbilden, an der die Schlittschuhklinge (12) befestigt ist.

8. Schlittschuhstiefel nach Anspruch 6, bei dem die Innen- und Außenbodenabschnitte (40, 42; 400, 420) Innen- und Außenbodenoberflächen umfassen, wobei die Schlittschuhklinge (12) an einer der Innen- oder Außenbodenoberflächen befestigt ist.

9. Schlittschuhstiefel nach Anspruch 6, bei dem die Innen- und Außenbodenabschnitte (40, 42; 400, 420) eine Längsnut definieren, in der die Schlittschuhklinge aufgenommen ist.

10. Schlittschuhstiefel nach Anspruch 6, bei dem jeder der Innen- und Außenrandabschnitte (36, 38; 360, 380) eine Öffnung (52) zum Reduzieren des Gewichts des Schlittschuhstiefels umfasst.

11. Schlittschuhstiefel nach Anspruch 10, bei dem die Innen- und Außenrandabschnitte (36, 38; 360, 380) derart warmgeformt sind, dass sie einen vorderen Sockel (56), einen hinteren Sockel (58) und einen Brückenabschnitt (60) umfassen, der den vorderen und den hinteren Sockel (56, 58) verbindet, wobei sich die Öffnung (52) zwischen dem vorderen und dem hinteren Sockel (56, 58) und über dem Brückenabschnitt (60) befindet.

12. Schlittschuhstiefel nach Anspruch 11, bei dem die Innen- und Außenboden- und Zehabschnitte entlang einer Längslinie (44; 54) aneinander befestigt sind.

13. Schlittschuhstiefel nach Anspruch 12, bei dem die Innen- und Außenrandabschnitte (36, 38; 360, 380) an einem hinteren Abschnitt (59) des hinteren Sockels (58) integriert zusammen ausgebildet sind.

14. Schlittschuhstiefel nach Anspruch 12, bei dem die Innen- und Außenrandabschnitte (36, 38; 360, 380) an einem vorderen Abschnitt des vorderen Sockels (56) integriert zusammen ausgebildet sind.

15. Schlittschuhstiefel nach Anspruch 6, bei dem die Innen- und Außenzehabschnitte an einer integrierten Vorderkappe (500) integriert zusammen ausgebildet sind.

16. Schlittschuhstiefel nach Anspruch 6, mit einer Zunge (16), die sich nach oben und nach hinten von dem Innen- und dem Außenzehabschnitt (50, 51) erstreckt.

17. Schlittschuhstiefel nach Anspruch 6, mit einer Zunge, die mit einem der Innen- und Außenseitenabschnitte (28, 30) integriert ausgebildet ist.

18. Schlittschuhstiefel nach Anspruch 15, mit einer Zunge, die sich nach oben und nach hinten von der Vorderkappe (500) erstreckt.

19. Schlittschuhstiefel nach Anspruch 18, bei dem die Zunge mit einem der Innen- und Außenseitenabschnitte (28, 30; 280, 300) integriert ausgebildet ist.

20. Schlittschuhstiefel nach Anspruch 6, bei dem die Außenschale (14; 140) ferner eine äußere Lage und eine innere Lage umfasst, wobei die äußere Lage steifer als die innere Lage ist.

21. Schlittschuhstiefel nach Anspruch 20, bei dem die Lage aus warmformbarem Schaum zwischen der inneren und der äußeren Lage liegt.

22. Schlittschuhstiefel nach Anspruch 21, bei dem die Lagen aus unterschiedlichen Klassen von wärmeformbarem Schaum hergestellt sind.

23. Schlittschuhstiefel nach Anspruch 6, bei dem der Fersenabschnitt (24) im Wesentlichen schalenförmig ist, um der Kontur der Ferse des Fußes zu folgen.

24. Schlittschuhstiefel nach Anspruch 23, bei dem der Knöchelabschnitt (26; 260) eine schalenförmige Außenmulde (34), zum Aufnehmen des Außenknöchels, und eine schalenförmige Mulde (32) umfasst, zum Aufnehmen des Innenknöchels.

25. Schlittschuhstiefel nach Anspruch 24, bei dem die schalenförmige Außenmulde (34) unterhalb der schalenförmigen Innenmulde (32) ist.

26. Schlittschuhstiefel nach Anspruch 6, mit einem Innenfutter (20), das an einer inneren Oberfläche der Außenschale (14; 140) befestigt ist, wobei das Innenfutter eine Oberfläche umfasst, die zum Kontakt mit der Ferse, dem Knöchel und Innen- und Außenseiten des Fußes bestimmt ist.

27. Schlittschuhstiefel nach Anspruch 6, mit einem Fußbett (22), das eine obere Oberfläche (23), die der Plantaroberfläche des Fußes zugewandt ist, und eine Wand (25) aufweist, die von der oberen Oberfläche nach oben vorsteht,
wobei sich die Wand teilweise über die Ferse wölbt und sich hoch zu einer Innenlinie des Fußes erstreckt.

28. Verfahren zur Herstellung eines Schlittschuhstiefels (10) zum Umschließen eines menschlichen Fußes, wobei der Fuß eine Ferse, einen Knöchel mit einem Innenknöchel und einem Außenknöchel, eine Plantaroberfläche, Innenseiten und Außenseiten und Zehen aufweist, wobei das Verfahren umfasst: Bereitstellen eine Bogens mit einer Lage aus wärmeformbarem Schaum (92); Wärmeformen des Bogens (92), um eine Außenschale (14; 140) auszubilden, die umfasst: einen Fersenabschnitt (24) zum Aufnehmen der Ferse des Fußes; einen Knöchelabschnitt (26; 260) zum Aufnehmen des Knöchels; Innen- und Außenseitenabschnitte (28, 30; 280, 300), um den Innenbeziehungsweise Außenseiten des Fußes gegenüberzuliegen; und Innen- und Außenzehabschnitte (50, 51; 500) zum Bedecken der Zehen des Fußes; wobei das Verfahren **gekennzeichnet ist, durch**
(a) Wärmeformen der Außenschale (14, 140), derart, dass sie einen Innenrandabschnitt (36; 360), der sich von der Innenseite und Zehabschnitten nach unten erstreckt, und einen Außenrandabschnitt (38; 380) umfasst, der sich von der Außenseite und dem Zehabschnitt nach unten erstreckt; und
(b) Zusammenlegen der Innen- und Außenrandabschnitte zum Ausbilden von Innen- und Außenbodenabschnitten (40, 42; 400, 420) zum Aufnehmen einer Schlittschuhklinge (12).

29. Verfahren nach Anspruch 28, mit Zusammenlegen der Innen- und Außenrandabschnitte zum Ausbilden von Innen- und Außensohlenabschnitten, um der Plantaroberfläche des Fußes gegenüberzuliegen.

30. Verfahren nach Anspruch 28 oder 29, mit Aneinanderbefestigen der Innen- und Außenbodenabschnitte zum Ausbilden einer Bodenoberfläche, an welcher eine Schlittschuhklinge anbringbar ist.

31. Verfahren nach Anspruch 28 oder 29, mit Ausbilden einer Längsnut innerhalb der Innen- und Außenbodenabschnitte zum Aufnehmen einer Schlittschuhklinge in der Nut.

32. Verfahren nach einem der Ansprüche 28 bis 31, mit Befestigen eines Innenfutters an einer inneren Oberfläche der Außenschale, wobei das Innenfutter eine Oberfläche umfasst, die zum Kontakt mit der Ferse, dem Knöchel und Innen- und Außenseiten des Fußes bestimmt ist.

33. Verfahren nach einem der Ansprüche 28 bis 32, mit Befestigen einer Zunge an den Innen- und Außenzehabschnitten.

34. Verfahren nach einem der Ansprüche 28 bis 33, mit Stanzschneiden eines Rohlings (90) von dem Bogen (92), wobei der Rohling (90) das Profil der Außenschale (14; 140) aufweist.

## Revendications

1. Chaussure de patin à glace (10) pour entourer un pied humain, le pied ayant un talon, une cheville avec une malléole interne et une malléole externe, une surface plantaire, des côtés médial et latéral et des orteils, ladite chaussure de patin à glace (10) comprenant une coque extérieure (14 ; 140) ayant une couche de mousse thermoformable, ladite coque extérieure étant thermoformée de telle manière qu'elle comprenne : une portion de talon (24) pour recevoir le talon du pied ; une portion de cheville (26 ; 260) pour recevoir la cheville ; des portions de côtés médial et latéral (28, 30 ; 280, 300) destinées à faire face respectivement aux côtés médial et latéral du pied ; et des portions médiale et latérale d'orteils (50, 51 ; 500) destinées à couvrir les orteils du pied ;
ladite chaussure de patin étant **caractérisée en ce que** ladite coque extérieure est thermoformée de telle manière qu'elle comprenne : une portion de jupe médiale (36 ; 360) s'étendant vers le bas depuis ledit côté médial et les portions d'orteils et une portion de jupe latérale (38 ; 380) s'étendant vers le bas depuis ledit côté latéral et les portions d'orteils, lesdites portions de jupe médiale et latérale comprenant des portions inférieures médiale et latérale (40, 42 ; 400, 420) pour recevoir une lame de patin à glace (12).

2. Chaussure de patin à glace selon la revendication 1, dans laquelle lesdites portions inférieures médiale et latérale (40, 42 ; 400, 420) comprennent des surfaces inférieures médiale et latérale formant une surface inférieure (41) sur laquelle la lame de patin à glace (12) est fixée.

3. Chaussure de patin à glace selon la revendication 1, dans laquelle lesdites portions inférieures médiale et latérale (40, 42 ; 400, 420) comprennent des surfaces inférieures médiale et latérale, la lame de patin à glace (12) étant fixée sur l'une desdites surfaces inférieures médiale et latérale.

4. Chaussure de patin à glace selon la revendication 1, dans laquelle lesdites portions inférieures médiale et latérale (40, 42 ; 400, 420) définissent une rainure longitudinale dans laquelle la lame de patin à glace (12) est reçue.

5. Chaussure de patin à glace selon la revendication 1, dans laquelle lesdites portions inférieures médiale et latérale (40, 42 ; 400, 420) sont fixées ensemble.

6. Chaussure de patin à glace selon la revendication 5, dans laquelle lesdites portions de jupe médiale et latérale (36, 38 ; 360, 380) sont thermoformées de telle manière qu'elles comprennent des portions respectives de semelle médiale et latérale (43, 45) destinées à faire face à la surface plantaire du pied.

7. Chaussure de patin à glace selon la revendication 6, dans laquelle lesdites portions inférieures médiale et latérale (40, 42 ; 400, 420) comprennent des surfaces inférieures médiale et latérale formant une surface inférieure (41) sur laquelle la lame de patin à glace (12) est fixée.

8. Chaussure de patin à glace selon la revendication 6, dans laquelle lesdites portions inférieures médiale et latérale (40, 42 ; 400, 420) comprennent des surfaces inférieures médiale et latérale, la lame de patin à glace (12) étant fixée sur l'une des surfaces inférieures médiale et latérale.

9. Chaussure de patin à glace selon la revendication 6, dans laquelle lesdites portions inférieures médiale et latérale (40, 42 ; 400, 420) définissent une rainure longitudinale dans laquelle la lame de patin à glace (12) est reçue.

10. Chaussure de patin à glace selon la revendication 6, dans laquelle chacune desdites portions de jupe médiale et latérale (36, 38 ; 360, 380) comprend une ouverture (52) destinée à réduire le poids de ladite chaussure de patin.

11. Chaussure de patin à glace selon la revendication 10, dans laquelle lesdites portions de jupe médiale et latérale (36, 38 ; 360, 380) sont thermoformées de telle manière qu'elles comprennent un socle avant (56), un socle arrière (58) et une portion de pont (60) reliant lesdits socles avant et arrière (56, 58), lesdites ouverture (52) étant situées entre lesdits socles avant et arrière (56, 58) et au-dessus de ladite portion de pont (60).

12. Chaussure de patin à glace selon la revendication 11, dans laquelle lesdites portions inférieures médiale et latérale et lesdites portions de talon sont fixées ensemble le long d'une ligne longitudinale (44 ; 54).

13. Chaussure de patin à glace selon la revendication 12, dans laquelle lesdites portions de jupe médiale et latérale (36, 38 ; 360, 380) sont formées ensemble d'une pièce dans une portion arrière (59) dudit socle arrière (58).

14. Chaussure de patin à glace selon la revendication 12, dans laquelle lesdites portions de jupe médiale et latérale (36, 38 ; 360, 380) sont formées ensemble d'une pièce dans une portion avant dudit socle avant (56).

15. Chaussure de patin à glace selon la revendication 6, dans laquelle lesdites portions médiale et latérale d'orteils sont formées ensemble d'une pièce pour former un bout intégré (500).

16. Chaussure de patin à glace selon la revendication 6, comprenant une languette (16) s'étendant vers le haut et vers l'arrière depuis lesdites portions médiale et latérale d'orteils (50, 51).

17. Chaussure de patin à glace selon la revendication 6, comprenant une languette qui est formée d'une pièce avec l'une desdites portions de côtés médial et latéral (28, 30).

18. Chaussure de patin à glace selon la revendication 15, comprenant une languette s'étendant vers le haut et vers l'arrière depuis ledit bout (500).

19. Chaussure de patin à glace selon la revendication 18, dans laquelle ladite languette est formée d'une pièce avec l'une desdites portions de côtés médial et latéral (28, 30 ; 280, 300).

20. Chaussure de patin à glace selon la revendication 6, dans laquelle ladite coque extérieure (14 ; 140) comprend en outre une couche extérieure et une couche intérieure, ladite couche extérieure étant plus rigide que ladite couche intérieure.

21. Chaussure de patin à glace selon la revendication 20, dans laquelle ladite couche de mousse thermoformable se trouve entre lesdites couches extérieure et intérieure.

22. Chaussure de patin à glace selon la revendication 21, dans laquelle lesdites couches sont constituées de différentes catégories de mousse thermoformable.

23. Chaussure de patin à glace selon la revendication 6, dans laquelle ladite portion de talon (24) est sensiblement en forme de coupelle pour suivre le contour du talon du pied.

24. Chaussure de patin à glace selon la revendication 23, dans laquelle ladite portion de cheville (26 ; 260) comprend un creux latéral (34) en forme de coupelle pour recevoir la malléole externe et un creux médial (32) en forme de coupelle pour recevoir la malléole interne.

25. Chaussure de patin à glace selon la revendication 24, dans laquelle ledit creux latéral (34) en forme de coupelle se trouve en dessous dudit creux médial (32) en forme de coupelle.

26. Chaussure de patin à glace selon la revendication 6, comprenant une doublure intérieure (20) fixée sur une surface intérieure de ladite coque extérieure (14 ; 140), ladite doublure intérieure comprenant une surface conçue pour être en contact avec le talon, la cheville et les côtés médial et latéral du pied.

27. Chaussure de patin à glace selon la revendication 6, comprenant un support de pied (22) ayant une surface supérieure (23) faisant face à la surface plantaire du pied et une paroi (25) faisant saillie vers le haut depuis ladite surface supérieure, ladite paroi bordant partiellement le talon et s'étendant jusqu'à une ligne médiale du pied.

28. Procédé de fabrication d'une chaussure de patin à glace (10) pour entourer un pied humain, le pied ayant un talon, une cheville avec une malléole interne et une malléole externe, une surface plantaire, des côtés médial et latéral et des orteils, ledit procédé comprenant : la fourniture d'une feuille ayant une couche de mousse thermoformable (92) ; le thermoformage de ladite feuille (92) pour former une coque extérieure (14 ; 140), qui comprend : une portion de talon (24) pour recevoir le talon du pied ; une portion de cheville (26 ; 260) pour recevoir la cheville ; des portions de côtés médial et latéral (28, 30 ; 280, 300) destinées à faire face respectivement aux côtés médial et latéral du pied ; et des portions médiale et latérale d'orteils (50, 51 ; 500) destinées à couvrir les orteils du pied ; ledit procédé étant **caractérisé** (a) par le thermoformage de ladite coque extérieure (14; 140) de telle manière qu'elle comprenne une portion de jupe médiale (36 ; 360) s'étendant vers le bas depuis ledit côté médial et les portions d'orteils et une portion de jupe latérale (38 ; 380) s'étendant vers le bas depuis ledit côté latéral et les portions d'orteils, et (b) par le pliage desdites portions de jupe médiale et latérale pour former des portions inférieures médiale et latérale (40, 42 ; 400, 420) pour recevoir une lame de patin à glace (12).

29. Procédé selon la revendication 28, comprenant le pliage desdites portions de jupe médiale et latérale pour former des portions de semelle médiale et latérale destinées à faire face à la surface plantaire du pied.

30. Procédé selon la revendication 28 ou 29, comprenant le fait de fixer ensemble lesdites portions inférieures médiale et latérale pour former une surface inférieure sur laquelle une lame de patin à glace peut être montée.

31. Procédé selon la revendication 28 ou 29, comprenant la formation d'une rainure longitudinale dans lesdites portions inférieures médiale et latérale pour recevoir une lame de patin à glace dans ladite rainure.

32. Procédé selon l'une quelconque des revendications 28 à 31, comprenant la fixation d'une doublure intérieure sur une surface intérieure de ladite coque extérieure, ladite doublure intérieure comprenant une surface conçue pour être en contact avec le talon, la cheville et les côtés médial et latéral du pied.

33. Procédé selon l'une quelconque des revendications 28 à 32, comprenant la fixation d'une languette sur lesdites portions médiale et latérale d'orteils.

34. Procédé selon l'une quelconque des revendications 28 à 33, comprenant le découpage d'une ébauche (90) dans ladite feuille (92), ladite ébauche (90) ayant le profil de la coque extérieure (14 ; 140).
